# EUROPEAN PATENT APPLICATION

(11) **EP 3 101 785 A1**
(43) Date of publication of application: **07.12.2016**
(21) Application number: 15460075.3
(22) Date of filing: 23.09.2015
(51) Int. Cl.: H02K 11/01, H02K 5/132, H02K 5/22, H02K 3/50, H02K 3/52

(54) **ELECTRIC PROPULSION UNIT, ESPECIALLY FOR SUBMERSIBLE DEVICES**

(30) Priority: 02.06.2015 PL 41257315
(71) Applicant: Politechnika Gdanska, 80-233 Gdansk (PL)
(72) Inventor: Rowinski, Lech, 83-020 Cedry Wielkie (PL); Sauer, Tomasz, 81-881 Sopot (PL)

(57) **Abstract**

The electric propulsion unit, especially for submersible devices, is characteristic in that the rotor (5) and the stator casing (11) of the motor (1) are connected together via the front cover (13) and the rear cover (15), in which the front bearing (8) and the rear bearing (9) are mounted, while the front cover (13) and the rear cover (15) are pressed to the stator casing (11) by tie rods (16) and (17), and the first screen (22) made of magnetically soft material of high magnetic flux saturation value, preferably not lower than 400 000, is mounted flexibly on elastic pads (20) and (21) on the outer surfaces of the front cover (13) and the rear cover (15), while the front axial field screen (28) and the rear axial field screen (29), both made of magnetically soft material of as high magnetic flux saturation value as possible, preferably not lower than 2 Tesla, are mounted, respectively, inside the front cover (13) and the rear cover (15), and the secondary screen (26) made of magnetically soft material of very high relative magnetic permeability coefficient, preferably not lower than 400 000 is mounted to the inner surface of the motor casing (23), while an additional magnetic screen (27) made of magnetically soft material of very high relative magnetic permeability coefficient, preferably not lower than 400 000, is mounted on the outer surface of the motor casing (23). The first secondary axial field screen (30) is mounted on the outer surface of the front cover (13), and the second secondary axial field screen (31) is mounted on the outer surface of the rear cover (15), both screens being made of magnetically soft material of very high initial relative magnetic permeability coefficient, preferably not lower than 30 000, and very high maximal relative magnetic permeability coefficient, preferably not lower than 400 000. The passage (38) is made in the rear support (4), in which the electric cables (40) connected with the stator winding (12) are located. The motor power supply (2) is located in the power supply casing (41). A set of elements is mounted to the power supply casing (41) which consists of the diaphragm (53) with the attached pressure plate (52) pressed to the diaphragm (53) by springs (51) located in the sockets (50) made in the cover (49) of the power supply casing (41).

## Description

The subject of the invention is an electric propulsion unit, especially for submersible devices, which is particularly applicable in water environment.

A well-known electric propulsion unit for underwater applications consists of a motor with stator and rotor, a screw propeller, a rear cover, a slide bearing, and a bearing situated inside the rotor in the intermediate casing. In this unit the rotor axis is motionless with respect to the rear cover of the motor. The bearing is protected against the action of aggressive outer environment by sealing the rotor axis, and, additionally, against high pressure by a compensation diaphragm. The role of the bearing is simultaneous transmission of centring loads and longitudinal thrust forces coming from the screw propeller.

A disadvantage of this solution is relatively large emission of static magnetic fields and electromagnetic fields resulting from the structure of that propulsion unit.

The goal of the present invention is to work out the structure of the electric propulsion unit, especially for submersible devices, which would be particularly applicable in water environment and free from the above disadvantages.

The essence of the invention is that the rotor and stator casing of the motor are connected together via a front cover and a rear cover, in which the front bearing and the rear bearing are mounted, respectively, while the front cover and the rear cover are pressed to the stator casing by tie rods. The first screen made of magnetically soft material of high magnetic flux saturation value, preferably not lower than 400 000, is mounted flexibly on elastic pads on the outer surfaces of the front cover and the rear cover, while the front axial field screen and the rear axial field screen are mounted, respectively, inside the front cover and the rear cover. These two screens are made of magnetically soft material of as high magnetic flux saturation value as possible, preferably not lower than 2 Tesla. The secondary screen made of magnetically soft material of very high relative magnetic permeability coefficient, preferably not lower than 400 000, is mounted to the inner surface of the motor casing. An additional magnetic screen made of magnetically soft material of very high relative magnetic permeability coefficient, preferably not lower than 400 000, is mounted on the outer surface of the motor casing. The first secondary axial field screen is mounted on the outer surface of the front cover, while the second secondary axial field screen is mounted of the outer surface of the rear cover. These two screens are made of magnetically soft material of very high initial relative magnetic permeability coefficient, preferably not lower than 30 000, and very high maximal relative magnetic permeability coefficient, preferably not lower than 400 000. The rear support has a specially made passage in with electric cables leading to the stator winding are located. The motor power supply is located in a casing, to which a diaphragm is attached. A pressure plate is pressed to the diaphragm by springs located in the sockets made in the power supply casing cover.

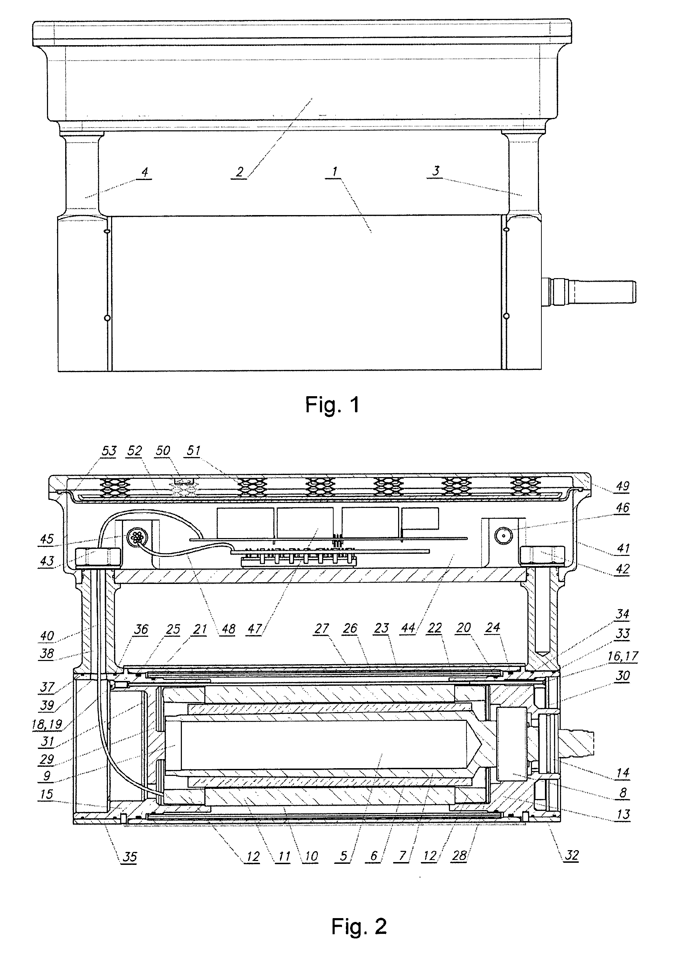

The subject of the invention is shown as an exemplary execution in the figures in which fig. 1 and fig. 2 show, respectively, the outer view and the cross section of the electric propulsion unit.

According to the invention, the electric propulsion unit consists of the motor 1 connected with the power supply 2 via the front support 3 and the rear support 4. The motor 1 consists of the rotor 5, which in turn consist of a set of permanent magnets 6 mounted to the rotor shaft 7 suspended on the front bearing 8 and the rear bearing 9, and the stator unit 10 consisting of the stator casing 11 and the stator winding 12. The stator casing 11 is mounted between the front cover 13, in which the front bearing 8 and the seal 14 of the rotor shaft 7 are mounted, and the rear cover 15, in which the rear bearing 9 is mounted. The front cover 13 and the rear cover 15 are pressed to the stator casing 11 by at least two tie rods 16 and 17 located in the holes made in the front cover 13 and the rear cover 15. The turnbuckles 18 and 19 are mounted in the tie rods 16 and 17, and the first screen 22 made of magnetically soft material of as high magnetic flux saturation value as possible, preferably not lower than 2 Tesla, is mounted flexibly on elastic pads 20 and 21 on the outer surfaces of the front cover 13 and the rear cover 15. The motor casing 23, sealed by the seal 24 with the front cover 13 and by the seal 25 with the rear cover 15, is put on the front cover 13 and the rear cover 15. The secondary screen 26 made of magnetically soft material of very high initial relative magnetic permeability coefficient, preferably not lower than 30 000 and very high maximal relative magnetic permeability coefficient, preferably not lower than 400 000, is mounted to the inner surface of the motor casing 23. An additional magnetic screen 27 made of magnetically soft material of very high relative magnetic permeability coefficient, preferably not lower than 400 000, can be mounted on the outer surface of the motor casing 23. The front axial field screen 28 is mounted inside the front cover 13, and the rear axial field screen 29 is mounted inside the rear cover 15. These two screens are made of magnetically soft material of as high magnetic flux saturation value as possible, preferably not lower than 2 Tesla. The first secondary axial field screen 30 is mounted on the outer surface of the front cover 13, and the second secondary axial field screen 31 is mounted on the outer surface of the rear cover 15. These two screens are made of magnetically soft material of very high initial relative magnetic permeability coefficient, preferably not lower than 30 000, and very high maximal relative permeability coefficient, preferably not lower than 400 000. The front eyepiece 32 is mounted on the front cover 13. It is connected with the front support 3 and sealed with the front cover 13 by seals 33 and 34. The rear eyepiece is 35 is mounted on the rear cover 15. This eyepiece is connected with the rear support 4 and sealed with the rear cover 15 by seals 36 and 37. The passage 38 is made in the rear support 4 as a connection to the hole 39 made in the rear cover 15. The passage 38 is a pathway for electric cables 40 connected with the stator winding 12. The front support 3 is mounted to the power supply casing 41 using the nut 42, while the rear support 4 is mounted to the power supply casing 41 using the nut 43. The motor power supply 2 consists of the power supply casing 41 filled with oil 44, in which at least one hermetic electric socket 45 and stub pipe with the non-return valve 46 are mounted. The electronic power circuit 47 for the motor 1 is mounted in the power supply casing 41 to enable changing the rotational speed and direction of rotations of the motor 1. The electronic power circuit 47 is connected with the hermetic electric socket 45 via cables 48, and with the motor 1 via electric cables 40. The cover 49, with sockets 50 and pressure springs 51 located in them to press the pressure plate 52 attached to the diaphragm 53 mounted between the power supply casing 41 and the cover 49, is fixed to the power supply casing 41.

## Claims

1. The electric propulsion unit, especially for submersible devices, wherein the improvement comprises connecting together the rotor (5) and the stator casing (11) of the motor (1) via the front cover (13) and the rear cover (15) in which the front bearing (8) and the rear bearing (9) are mounted, while the front cover (13) and the rear cover (15) are pressed to the stator casing (11) by tie rods (16) and (17), and the first screen (22) made of magnetically soft material of high magnetic flux saturation value, preferably not lower than 400 000, is mounted flexibly on elastic pads (20) and (21) on the outer surfaces of the front cover (13) and the rear cover (15), while the front axial field screen (28) and the rear axial field screen (29), both made of magnetically soft material of as high magnetic flux saturation value as possible, preferably not lower than 2 Tesla, are mounted, respectively, inside the front cover (13) and the rear cover (15), and the secondary screen (26) made of magnetically soft material of very high relative magnetic permeability coefficient, preferably not lower than 400 000 is mounted to the inner surface of the motor casing (23), while an additional magnetic screen (27) made of magnetically soft material of very high relative magnetic permeability coefficient, preferably not lower than 400 000, is mounted on the outer surface of the motor casing (23).

2. The electric propulsion unit acc. to the claim 1, wherein the improvement comprises mounting the first secondary axial field screen (30) on the outer surface of the front cover (13) and the second secondary axial field screen (31) on the outer surface of the rear cover (15), both screens being made of magnetically soft material of very high initial relative magnetic permeability coefficient, preferably not lower than 30 000, and very high maximal relative magnetic permeability coefficient, preferably not lower than 400 000.

3. The electric propulsion unit acc. to the claim 1, wherein the improvement comprises making the passage (38) in the rear support (4) and placing electric cables (40) connected with the stator winding (12) into it.

4. The electric propulsion unit acc. to the claim 1, wherein the improvement comprises mounting the motor power supply (2) in the power supply casing (41).

5. The electric propulsion unit acc. to the claim 4, wherein the improvement comprises mounting a set of elements to the power supply casing (41) which consists of the diaphragm (53) with the attached pressure plate (52) pressed to the diaphragm (53) by springs (51) located in sockets (50) made in the cover (49) of the power supply casing (41).
